# EUROPEAN PATENT SPECIFICATION

(11) **EP 0 628 223 B1**
(45) Date of publication and mention of the grant of the patent: **05.02.1997**
(21) Application number: 93904269.3
(22) Date of filing: 26.02.1993
(51) Int. Cl.: H02J 13/00, G08B 17/10

(54) **POWER SUPPLY, IN PARTICULAR FOR ALARM SYSTEM**
STROMVERSORGUNG, INSBESONDERE FÜR ALARMSYSTEM
ALIMENTATION, EN PARTICULIER POUR UN SYSTEME D'ALARME

(30) Priority: 29.02.1992 GB 9204416; 07.09.1992 GB 9218894
(43) Date of publication of application: 14.12.1994
(60) Divisional application: 95117086.9
(73) Proprietor: SCANTRONIC LIMITED, Greenford, Middlesex UB6 7RJ (GB)
(72) Inventor: MOORE, Robert William, Resolven, West Glamorgan SA11 4DS (GB)
(74) Representative: Crawford, Andrew Birkby
(86) International application number: GB9300409
(87) International publication number: WO9317482

(56) References cited:
- CH-A- 196 446
- DE-A- 1 915 906
- DE-A- 2 835 549
- DE-A- 2 835 765
- FR-A- 2 609 172
- GB-A- 1 528 671
- GB-A- 2 008 871
- GB-A- 2 187 018
- US-A- 4 167 688

## Description

This invention relates to an alarm, particularly but not solely to a smoke alarm, and to a switching arrangement which may be used in conjunction with units such as alarms.

Smoke alarms are known for mounting to ceilings, these smoke alarms commonly being small, self-contained, battery-powered units. The batteries need to be replaced periodically to maintain the alarm in an operable condition. However, many deaths and injuries have been caused by fire where the smoke alarm has failed to operate owing to its battery having discharged.

Smoke alarms are also rather unsightly items and many people prefer not to fit them rather than to have an alarm mounted to a ceiling e.g. in their living room.

Intruder detection alarms similarly suffer from being considered unsightly and failing to operate when needed because of exhaustion of batteries.

GB-A-2221074 provides a smoke alarm in which both of the above problems can be overcome. This is achieved by incorporating the smoke alarm into, or fitting it to, the ceiling rose of a pendant light. The alarm may be battery powered, but preferably it is powered from a mains supply which is fed to the ceiling rose. A disadvantage with this arrangement is that a permanent live supply has to be provided for the alarm in addition to the switched supply for the pendant light.

Although in some newly-wired buildings a permanent live supply will be present in each ceiling rose, this is not the case in older buildings nor according to the most recent wiring regulations. In the latter cases only a switched live supply is provided to the ceiling rose and the supply of current is dependent upon the status of the associated light switch. In such systems it would be difficult to fit an alarm of the sort described in GB-A-2221074.

We have now devised an arrangement which alleviates the above problem with the above mentioned smoke alarm.

Swiss Patent Application CH-A-196446 describes a system by virtue of which remote devices in large permanent installations such as public street lighting networks, can be switched on and off by providing an imbalance between the two half-waves of the main AC supply. This is done using a valve connected in parallel with a resistor.

In accordance with the invention there is provided a system for supplying switched and substantially continuous power, comprising an actuator and a sensing means, the actuator having one terminal for connection to an AC power supply and a second terminal for connection by a line to the sensing means, the actuator being arranged in use to respond to operation of a switch so as to produce an imbalance between the half-cycles of the waveform of the AC power passing to the sensing means and the sensing means being responsive to the balance between the waveform half-cycles to selectively connect or disconnect said line to one or more electrical outputs,

characterised in that the actuator comprises one or more diode packs, the or each diode pack comprising a first and a second string of diodes connected in parallel with one another and in opposite senses, each diode string comprising one or more diodes and the voltage drop across the first diode string being different from the voltage drop across the second diode string, wherein operation of the switch selectively connects said diode pack or packs to the line to produce said imbalance.

There is further provided an actuator for use in a system for providing switched and substantially continuous power, the system comprising the actuator and a sensing means, the actuator having one terminal for connection to an AC power supply and a second terminal for connection by a line to the sensing means, the actuator being arranged in response to operation of a switch to produce an imbalance between the half-cycles of the waveform of the AC power supplied to said line whereby to signal to the sensing means that said line should be selectively connected to or disconnected from one or more electrical outputs,
characterised in that the actuator comprises one or more diode packs connected the or each diode pack comprising a first and a second string of-diodes in parallel with one another and in opposite senses, each diode string comprising one or more diodes and the voltage drop across the first diode string being different from the voltage drop across the second diode string, wherein operation of the switch selectively connects said diode pack or packs to the line to produce said imbalance.

There is further provided sensing means for a system for supplying switched and substantially continuous power, the system comprising the sensing means and an actuator adapted in response to operation of a switch to produce an imbalance between the half-cycles of the waveform of AC power passing to the sensing means, the sensing means being responsive to the balance between half-cycles of said waveform to selectively connect or disconnect said line to one or more electrical outputs,
characterised by further comprising a balancing circuit for restoring the balance between the positive and negative half cycles of the AC waveform.

The invention provides the advantage that the system allows the use of the same circuitry and switchgear to independently switch one or two different devices connected to the same wiring circuit and to power a further device or devices which require substantially continuous power. Thus, a mains power cable to a ceiling rose can provide switching information to turn the light on or off and also provide stable AC power to an associated unit such as a smoke alarm.

Embodiments of the invention have the advantage that the on/off status of the switchable device(s) attached to the sensing means is not affected by a supply failure. Operation of the actuator during the period of the supply failure will not be detected by the sensing means and so will not alter the on/off state of the switchable device(s). When the power supply is restored then the switchable-device will remain in the on/off state it was prior to the failure.

In the invention the actuator is arranged to change the balance between positive and negative half cycles of the AC power waveform. Preferably the difference between cycles is limited so that the AC power available from the line is not substantially altered when there is an imbalance between the cycles.

It is further preferred that a balancing circuit be provided in the sensing means in order to restore the balance between the positive and negative half cycles so that the switching system does not load one half cycle of the mains more than the other half cycle.

It is possible to send two different switching signals depending upon which of the half-cycles of the AC waveform is modified. For example, when the positive half-cycle of the waveform is modified this may constitute a switching signal for a first device associated with the sensing means and when the negative half-cycle is modified then that may constitute a switching signal for a second unit associated with the sensing means. Thus a ceiling rose could have an alarm, a light and a ceiling fan associated with it, the latter two items being separately switchable.

Furthermore when used to control switching of a single device associated with the sensing means these switching methods can ensure a definite polarity of the switch and thus ensure freedom from false switching due to spurious signals, transients or noise which may be present in the supply from other sources.

The invention has the advantage that switching is signalled to the sensing means without introducing into the AC supply transient signals, modulations, noise or other effects which may be detrimental to the use of the supply. Also, the invention can provide two-way switching of the light (or other switchable appliance associated with the sensing means). That is, the switchable device can be controlled from two different switches, e.g. upstairs and downstairs light switches.

The switching action produces only a small voltage change across the switch terminals and in the wires running from the switch to the alarm or any other connected device. This not only reduces arcing and switch contact erosion but can be used as the basis of a "low noise switching system" in certain applications.

Embodiments of this invention will now be described by way of examples only and with reference to the accompanying drawings in which:
FIGURE 1 is a sectional view of an actuator for a switching arrangement which serves as an aid to gaining fuller understanding of this invention;
FIGURE 2 is a circuit diagram of a modified version of the above actuator;
FIGURE 3 is a circuit diagram of a sensing means for sensing AC power waveform modifications caused by the actuator of Figure 1 or Figure 2;
FIGURE 4 is a waveform diagram to explain the operation of the circuits of Figures 2 and 3;
FIGURE 5 shows circuit diagrams of preferred embodiments of actuator for a switching arrangement in accordance with this invention, in which:
FIGURE 5a) illustrates single way balance switching;
FIGURE 5b) illustrates two way balance switching in an older two plate wiring system; and
FIGURE 5c) illustrates two way balance switching in a modern three plate wiring system ;
FIGURE 6 shows truth tables to explain the operation of the circuits of Figure 5;
FIGURE 7 is a circuit diagram of a sensing means for sensing AC power waveform modifications caused by the actuators of Figure 5;
FIGURE 8 is a sectional view of a smoke alarm ; and
FIGURE 9 is a sectional view of a modified form of the alarm shown in Figure 8.

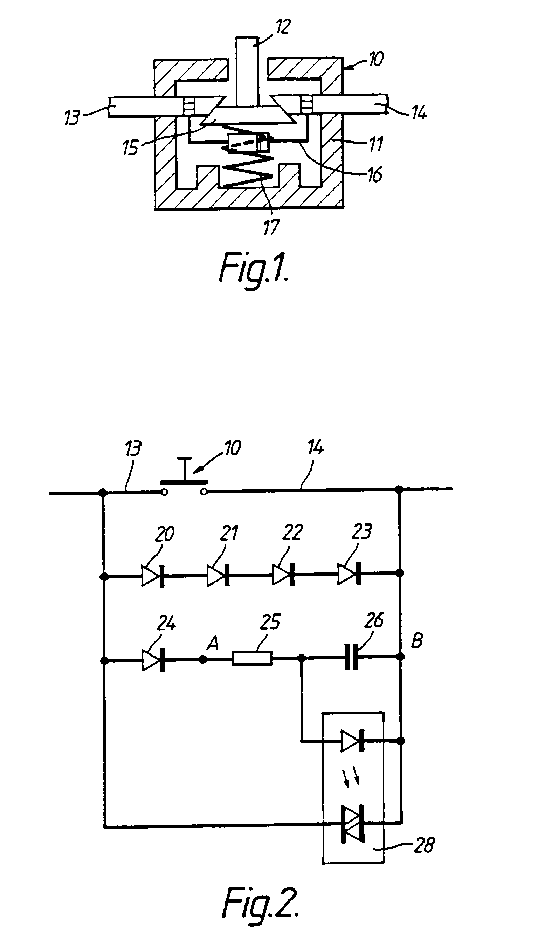

Referring to Figure 1 of the drawings, there is shown a push-button switch 10 comprising a plastics push-button 12 slidably mounted in a plastics housing 11. Inlet and outlet electrical conductors 13, 14 extend through the wall of the housing and a diode 16 is connected between the conductors 13, 14 inside the housing. A contact arm 15 is connected to the push button 12 for connecting the two conductors 13, 14. A spring 17 biases the contact arm 15 so that an electrical connection is maintained between the conductors 13, 14 when the button 12 is released.

In use when AC mains power is applied to the conductor 13, this AC power will appear on the second conductor 14. If the push-button 12 is pressed the connection between the conductors 13, 14 will break, but the diode 16 will conduct the AC mains power during positive half cycles only. The sensing circuit described below senses the rectified power in the conductor 14 to change the state of a light bulb. The interruption period to the full mains power is sufficiently small to ensure that a smoke alarm connected to conductor 14 will continue to receive sufficient power. However some form of charge storage device may be provided to ensure a continued level of power.

The smoke alarm may contain a step down transformer to power its low voltage circuitry.

Referring to Figure 2 there is shown a circuit which is designed to limit the duration of half-wave rectified power when the push-button 10 is held open-circuit for too long. The circuit provides a fixed period of half-wave rectified mains to the second conductor 14 before switching in the negative half-cycles of the mains power using an optical triac 28.

Four diodes 20, 21, 22, 23 are connected in series across the switch 10. A diode 24, resistor 25 and capacitor 26 are also connected across the switch 10. An optical triac 28 has its LED terminals connected across the capacitor 26 and its triac terminals connected across the switch 10.

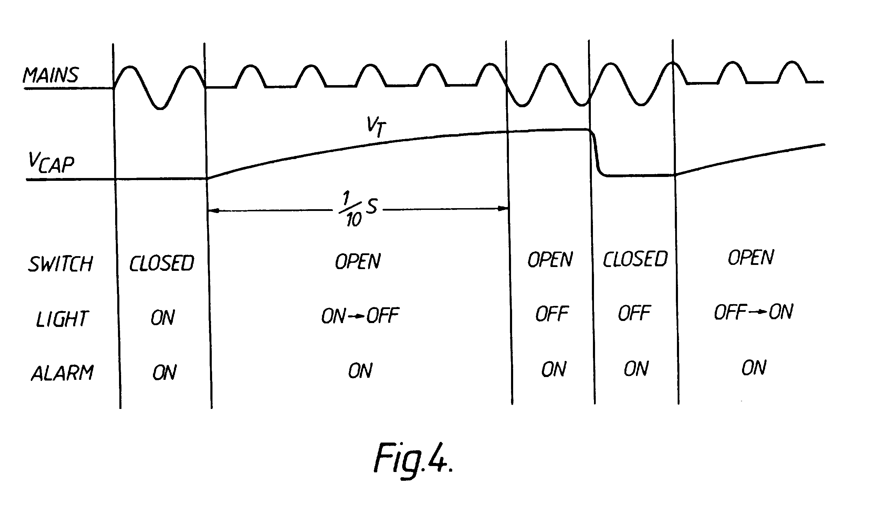

In use, the circuit of Figure 2 half-wave rectifies the mains AC when the push-button 10 is depressed as shown in Figure 4. A 1.8 volts drop is created between the points A, B and the capacitor 26 starts to charge through resistor 25. When voltage V_{CAP} across the capacitor 26 reaches the switching voltage V_{T} of the optical triac 28, the triac conducts in both directions. Therefore, full wave AC mains is supplied to the conductor 14 after the push-buttqn 10 has been depressed for a period equal to the time constant of the resistor and capacitor 25, 26.

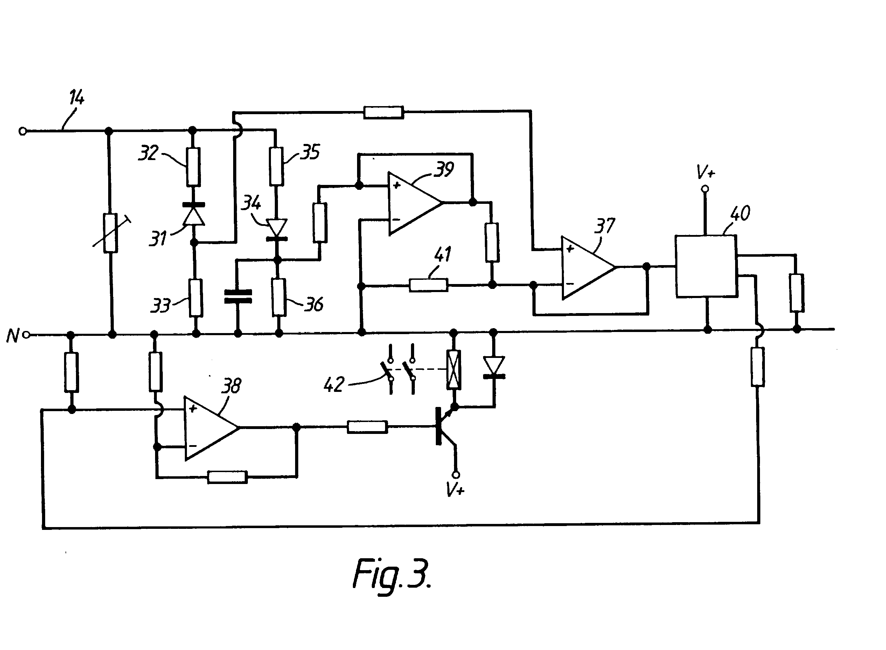

Referring to Figure 3 of the drawings, there is shown a circuit for sensing the periods of half-wave rectified power and for switching a light ON or OFF on alternate such periods. A diode 31 blocks the positive half cycles appearing on the conductor 14, and thus no voltage appears across the voltage divider formed by resistors 32, 33. The diode 34 passes the positive half cycles of the mains power and hence a positive voltage is developed across the voltage divider formed by resistors 35, 36. This positive voltage causes comparators 39 and 37 to switch a negative output to the gate of a flip-flop 40.

During the half-wave rectified period the gate of the flip flop 40 is held negative via the resistor 41 and the output from the comparator 39. When the full-cycle mains reappears on the conductor 14, the flip-flop changes state i.e from high to low, or from low to high. The comparator 38 is therefore switched by flip-flop 40 to drive a relay 42 which switches the light ON or OFF.

In an alternative embodiment a resistor, capacitor or other device may be momentarily switched in series with the mains instead of diodes. In this case the sensing device would be modified to sense these different devices. Alternatively it may be arranged to sense an open circuit of a predetermined duration in order to switch the light.

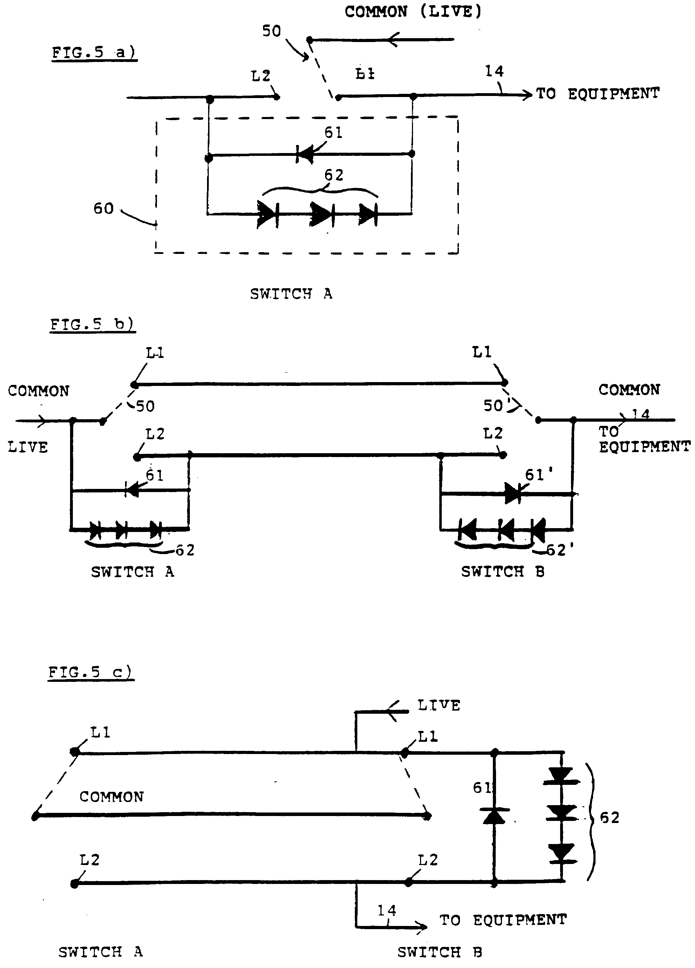

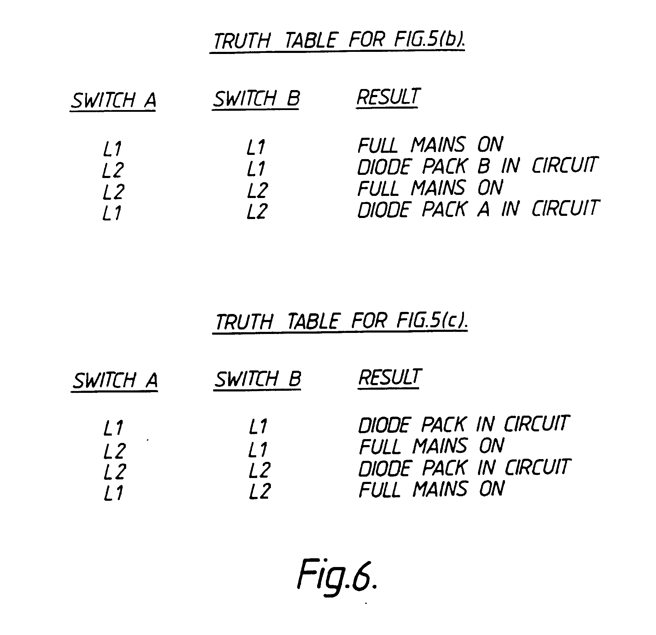

Referring to Figure 5 of the drawings there are shown a number of different arrangements according to embodiments of the invention. In these embodiments electrical components are provided which produce an imbalance between the positive and negative half-cycles of the AC waveform.

Fig. 5a illustrates single way balance switching. The switch A comprises an openable contact 50. A diode pack 60 is connected across the terminals of the switch A. The diode pack consists of a series of diodes 62 connected across the openable contact 50 and a single diode 61 connected in anti-parallel across the series of diodes 62.

When the contact 50 is open, i.e. it contacts the terminal L1 as illustrated, then unmodified AC power is fed from the supply to the equipment. When the openable contact 50 contacts terminal L2 then the AC waveform is modified by the diode pack 60 so as to produce an imbalance between the half-cycles of the waveform. During the positive half-cycle of the waveform the series of diodes 62 conduct and during the negative half-cycles the single diode 61 conducts. Each diode introduces a voltage drop (of the order of 0.7 V for silicon diodes). Because different numbers of diodes are in the current path during the different half-cycles of the supply a different voltage drop will be seen between the half-cycles. If there are say ten diodes in the series 62 then there will be a significant imbalance between the voltages of the positive and negative half cycles. This imbalance may be detected and used to control switching.

The operation of the circuit of Fig. 5b) will now be described with reference to Figure 6. When both switch A and switch B are closed, mains AC appears on the output 14. Opening switch A allows mains to flow through the diode 61 during negative half cycles and through the series of diodes 62 during positive half cycles. Likewise when switch A is closed and switch B is open there is a similar imbalance but in the opposite sense. When both switch A and switch B are open, as illustrated, then full mains power is again supplied to the output line 14.

The operation of the circuit of Fig. 5c) will now be described with reference to Figure 6. When both switch A and switch B are open, as illustrated, mains flows through the diode 61 during negative half cycles and through the series of diodes 62 during positive half cycles. This produces an imbalance in the AC waveform detectable by a sensing means attached to the output line 14. Likewise when both switch A and switch B are closed then there is a similar imbalance in the AC waveform. When one switch is open and the other closed then full mains power is supplied to the output line 14.

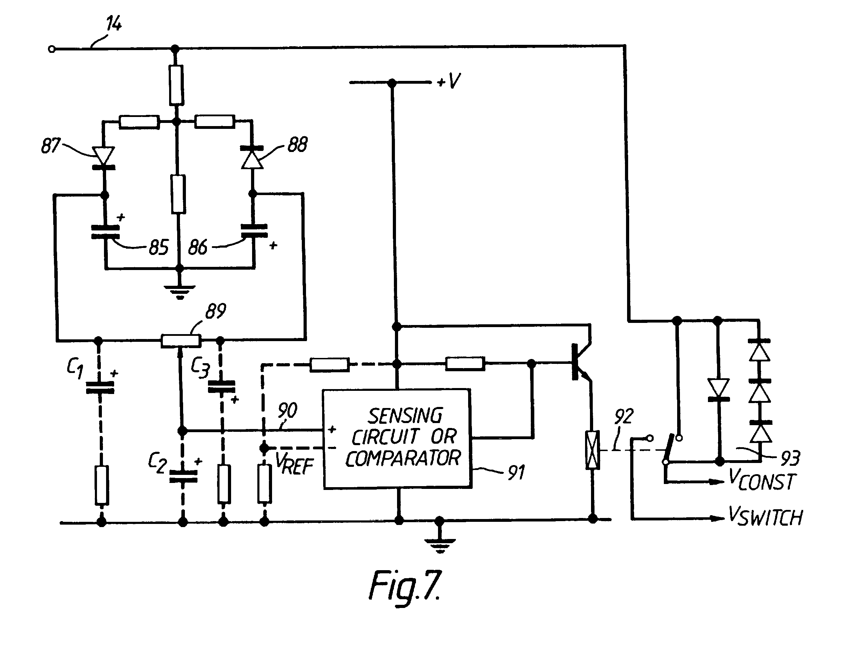

Figure 7 shows a circuit for sensing the mains voltage output by the circuits of Fig.5a), 5b) or c) in order to determine what the state of the switched output V_{SWITCH} should be. The circuit comprises diodes 87, 88 in series with respective capacitors 85, 86 which are charged by the positive and negative half cycles of the mains supply respectively. A balancing potentiometer 89 is connected across the capacitors 87, 88. The potentiometer 89 is adjusted so that the voltage on its output 90 is zero when the capacitor voltages are equal and opposite. A sensing circuit 91 senses the voltage on the potentiometer output 90 and switches a relay 92 directly, or via a transistor, according to the value of the sensed voltage.

When an imbalance in the mains supply exists a positive or negative voltage exists on the potentiometer output 90, and when the mains supply is balanced zero volts exists on the potentiometer output 90. The sensing circuit 91 operates the relay 92 when zero volts is sensed. Thus it will be appreciated that changing the state of either switch A or switch B will change the state of the switched output V_{SWITCH}. Thus the arrangement shown in Figures 5b) and c) can be used as upstairs and downstairs light switches to control a single light connected to V_{SWITCH}.

A balancing circuit 93 may be provided which comprises a series of diodes connected in the opposite sense to the diodes mounted in the switch. The diodes are switched into circuit when the relay is actuated so that a load connected to V_{SWITCH} will be provided with a balanced AC signal.

The components shown by dashed lines in Fig.7 may be used to modify the basic circuit. The voltage on the potentiometer output is "smoothed" by the combined effect of capacitors C₁, C₂ and C₃ so as to reduce the AC component of the voltage. The "smoothed" voltage is then sensed by the circuit 91 which is here configured as a comparator circuit.

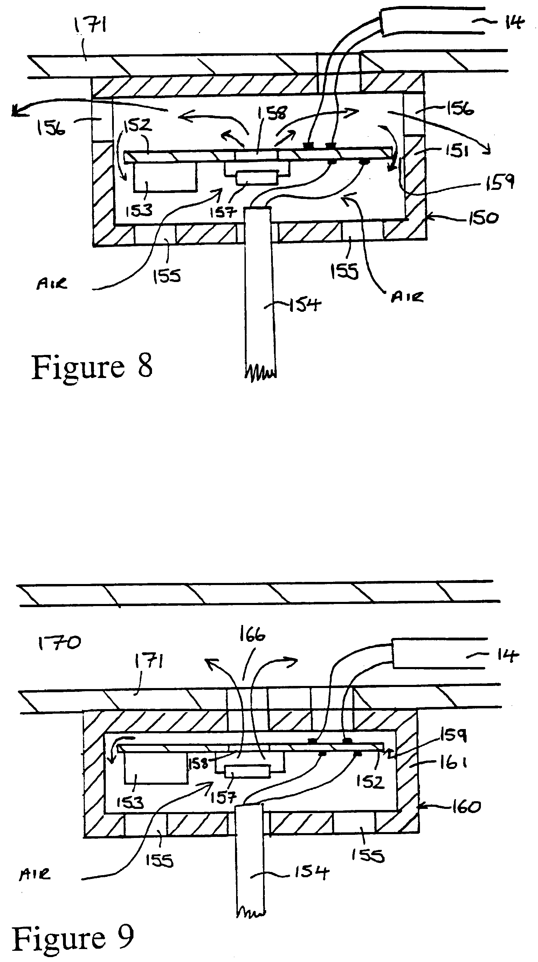

Referring to Figure 8 of the drawings there is shown a smoke alarm 150 having a casing 151 fixed to a ceiling 171. A printed circuit board 152 is mounted inside the casing 151 and a smoke detecting element 153 is mounted on the printed circuit board 152. An aperture 158 is formed in the printed circuit board near the centre of the casing, and a resistor 157 is mounted across the aperture 158. Secondary apertures 159 are formed around the periphery of the circuit board. A convenient way of forming the secondary holes 159 is to use a circuit board having a peripheral shape different from the internal section of the casing. For example, the casing may be of circular cross-section and the periphery of the circuit board may be hexagonal.

The bottom of the casing 151 is formed with a plurality of inlet holes or slots 155, and the upper side walls of the casing 151 are formed with a plurality of outlet holes or slots 156. A mains conductor 14 connects the alarm 150 to a wall-mounted switch e.g. as shown in Figure 1. The circuit of Figure 3 is preferably mounted on the printed circuit board 152. A cable 154 extends downwardly through the casing 151 to support a pendant light (not shown). The conductors of the cable preferably connect to the relay 42 shown in Figure 3.

In use, the resistor heats up and causes air to rise through the hole 158 in the circuit board. Thus a convection air current is caused to flow from the inlet to the outlet, creating a flow of air past the smoke detecting element 153. Some of the air in the upper chamber re-enters the lower chamber through the secondary holes 159, thus encouraging good mixing of air/gas within the sensor casing.

Air rising into the upper chamber also leaves the body of the smoke alarm through vents in the upper body moulding, thus allowing more air to enter via the vents in the lower body moulding.

Figure 9 shows a similar smoke alarm 160 and like parts are given like reference numerals. However, in this embodiment an outlet 166 is formed in the top of the casing 161. The outlet 161 feeds through a hole in the ceiling 171 into the ceiling cavity 170. The temperature difference between the room and the cavity 170 helps to promote the air convection current.

The smoke alarms e.g. 150,160 may be connected to other smoke alarms. The alarms may include a circuit to reduce the intensity of an audible alarm after a predetermined time period. This time period is set to ensure that the alarm is heeded, and a switch may be provided in each alarm to individually reduce the intensity of its audible signal. The other connected alarms sensing an alert will cause the alarm to revert to the full intensity audible signal. Any of the alarms which have automatically or manually reduced the intensity of their audible signal will continue to give that level until automatically resetting after a period of time.

An alarm may be preset to its low intensity status before an alarm condition is met. Whilst in this state no alerts will be detected by that alarm, although any other of the connected alarms which detect an alert will trigger the preset alarm.

It will be appreciated that the reduced intensity of the alarm signal minimises the disturbance caused to others, yet gives an ample warning of the alarm condition contained in devices connected to the second conductor.

According to the present invention it is possible to make use of different types and durations of modification of the AC waveform in order to signal to the sensing means that switching of an associated device should be effected. A number of different possible ways of modifying the AC waveform have already been mentioned above.

It is to be understood also that the duration of the modification of the AC waveform may take different values. In many embodiments it is preferable for the duration of the modification to be short so that the power supply to the alarm or the like is affected as little as possible. However, the duration of the modification must be sufficient so that the sensing means can reliably distinguish the modification from other effects on the mains supply.

In principle it would be possible to arrange that the modification of the AC waveform should persist until the next operation of the actuator. The next operation of the actuator would then cause the AC waveform to be restored to its original state or would cause a different modification of the AC power supply, e.g. the polarity of the modification could be altered.

The above description has been given in terms of a switching arrangement in which operation of a switch breaks a short circuit thus bringing into operation electrical components connected in parallel with the short circuit. Arrangements of this type are simple and relatively cheap to make. However, it is feasible from a technical viewpoint to use alternative arrangements.

For example, it is not essential that the switch should directly interact with the circuitry which produces the modification of the AC waveform. The switch may be arranged so that its operation causes the generation of a signal which triggers the operation of modifying section of the actuator. Furthermore, the switch causing modification of the AC waveform could be a time switch. In such a case there is no physical operation of a switch at the time when the modifying section is triggered into action. Digital components could be used in the switching arrangement.

In the arrangements described above in connection with the embodiment of the invention a diode pack was illustrated in which a series of diodes is connected in parallel with a single diode. It is to be understood that the single diode could be replaced by a series of diodes provided that the numbers of diodes in the two series were arranged to produce different voltage drops in the parallel current paths.

Although the invention has been described in terms of providing an alarm in association with a ceiling-mounted light, the same problems and solutions may apply if it is desired to provide an alarm in association with a wall-mounted light fitting. In such circumstances circulation of air through the alarm may be improved by providing an air outlet in communication with the other side of the wall, e.g. into the wall cavity.

Although the specific description has been given in terms of a ceiling rose/smoke alarm it is to be understood that the smoke alarm could be replaced by a different device, or more than one device could be used, requiring substantially continuous power. Further, it is to be understood that the switching arrangement of the present invention is of general application. In particular, the invention will be useful in various situations where it is desired to use power supply lines to send switching signals as well as power.

## Claims

1. A system for supplying switched and substantially continuous power, comprising an actuator and a sensing means, the actuator having one terminal for connection to an AC power supply and a second terminal (14) for connection by a line to the sensing means, the actuator being arranged in use to respond to operation of a switch (50,50') so as to produce an imbalance between the half-cycles of the waveform of the AC power passing to the sensing means and the sensing means being responsive to the balance between the waveform half-cycles to selectively connect or disconnect said line to one or more electrical outputs,
characterised in that the actuator comprises one or more diode packs (60), the or each diode pack comprising a first and second string of diodes connected in parallel with one another and in opposite senses, each diode string T61,62,61',62') comprising one or more diodes and the voltage drop across the first diode string (61,61') being different from the voltage drop across the second diode string (62,62'), wherein operation of the switch (50,50') selectively connects said diode pack or packs (60) to the line to produce said imbalance.

2. The system of claim 1, wherein the actuator is adapted selectively to produce two different modifications of the AC waveform whereby to signal different switching requirements to the sensing means.

3. The system of claim 2, wherein the different modifications of the AC waveform are of different polarities.

4. The system of claim 2 or 3, further comprising a balancing circuit (93) at or downstream of the sensing means for restoring the balance between the positive and negative half cycles of the AC waveform.

5. The system of claim 4, wherein the actuator is adapted to replace a light switch and the sensing means is adapted to selectively connect or disconnect said line to a light.

6. The system of claim 5, wherein the one or more further electrical outputs include an output to supply an alarm device.

7. The system of claim 6, wherein the alarm device is provided combined in a unit with a ceiling rose fitment.

8. An actuator for use in a system for providing switched and substantially continuous power, the system comprising the actuator and a sensing means, the actuator having one terminal for connection to an AC power supply and a second terminal (14) for connection by a line to the sensing means, the actuator being arranged in response to operation of a switch (50,50') to produce an imbalance between the half-cycles of the waveform of the AC power supplied to said line whereby to signal to the sensing means that said line should be selectively connected to or disconnected from one or more electrical outputs,
characterised in that the actuator comprises one or more diode packs (60), the or each diode pack comprising a first and a second string of diodes connected in parallel with one another and in opposite senses, each diode string (61,62,61',62') comprising one or more diodes and the voltage drop across the first diode string (61,61') being different from the voltage drop across the second diode string (62,62'), wherein operation of the switch (50,50') selectively connects said diode pack or packs (60) to the line to produce said imbalance.

9. The actuator of claim 8, adapted selectively to produce two different modifications of the AC waveform whereby to signal different switching requirements to the sensing means.

10. The actuator of claim 9, wherein the different modifications of the AC waveform are of different polarities.

11. The actuator of any of claims 8 to 10, configured as a light switch.

12. Sensing means for a system for supplying switched and substantially continuous power, the system comprising the sensing means and an actuator adapted in response to operation of a switch (50, 50') to produce an imbalance between the half-cycles of the waveform of AC power passing to the sensing means, the sensing means being responsive to the balance between half-cycles of said waveform to selectively connect or disconnect said line to one or more electrical outputs,
characterised by further comprising a balancing circuit (93) for restoring the balance between the positive and negative half cycles of the AC waveform.

## Patentansprüche

1. Ein System zum Zuführen von geschaltetem und im wesentlichen kontinuierlichen Strom, das eine Betätigungseinrichtung und eine Nachweiseinrichtung umfaßt, wobei die Betätigungseinrichtung eine Anschlußklemme zur Verbindung mit einer Wechselstromversorgung und eine zweite Anschlußklemme (14) zur Verbindung durch eine Leitung mit der Nachweiseinrichtung aufweist, die Betätigungseinrichtung im Einsatz ausgebildet ist, auf die Betätigung eines Schalters (50, 50') zu reagieren, um ein Ungleichgewicht zwischen den Halbperioden der Wellenform des Wechselstroms zu erzeugen, der zu der Nachweiseinrichtung geht, und die Nachweiseinrichtung auf das Gleichgewicht zwischen den Wellenformhalbperioden reagiert, um selektiv die genannte Leitung mit einem oder mehreren elektrischen Ausgängen zu verbinden oder zu trennen,
**dadurch gekennzeichnet**, daß die Betätigungseinrichtung eine oder mehrere Diodengruppen (60) umfaßt, wobei die oder jede Diodengruppe eine erste und zweite Diodenreihe umfaßt, die parallel zueinander und in entgegengesetzter Richtung angeordnet sind, jede Diodenreihe (61, 62, 61', 62') eine oder mehrere Dioden umfaßt, und der Spannungsabfall über die erste Diodenreihe (61, 61') von dem Spannungsabfall über die zweiten Diodenreihe (62, 62') verschieden ist, worin der Betrieb des Schalters (50, 50') selektiv die genannte Diodengruppe oder Gruppen (60) mit der Leitung verbindet, um das genannte Ungleichgewicht zu erzeugen.

2. Das System des Anspruchs 1, worin die Betätigungseinrichtung selektiv zwei unterschiedliche Abänderungen bei der Wechselstromwellenform erzeugen kann, um dadurch unterschiedliche Schaltanforderungen an die Nachweiseinrichtung zu übermitteln.

3. Das System des Anspruchs 2, worin die unterschiedlichen Abänderungen der Wechselstromwellenform unterschiedliche Polaritäten sind.

4. Das System des Anspruchs 2 oder 3, das ferner eine Ausgleichsschaltung (93) bei oder stromabwärts der Nachweiseinrichtung zum Wiederherstellen des Gleichgewichts zwischen den positiven und negativen Halbperioden der Wechselstromwellenform umfaßt.

5. Das System des Anspruchs 4, worin die Betätigungseinrichtung einen Lichtschalter ersetzten kann und die Nachweiseinrichtung selektiv die genannte Leitung mit einer Lampe verbinden oder unterbrechen kann.

6. Das System des Anspruchs 5, worin der eine oder mehrere weitere elektrische Ausgänge einen Ausgang einschließen, um eine Alarmeinrichtung zu versorgen.

7. Das System des Anspruchs 6, worin die Alarmeinrichtung in einer Einheit mit einem Deckenrosettensockel kombiniert vorgesehen ist.

8. Eine Betätigungseinrichtung zur Verwendung in einem System zum Zuführen von geschaltetem und im wesentlichen kontinuierlichen Strom, das eine Betätigungseinrichtung und eine Nachweiseinrichtung umfaßt, wobei die Betätigungseinrichtung eine Anschlußklemme zur Verbindung mit einer Wechselstromversorgung und eine zweite Anschlußklemme (14) zur Verbindung durch eine Leitung mit der Nachweiseinrichtung aufweist, die Betätigungseinrichtung in Reaktion auf die Betätigung eines Schalters (50, 50') ausgebildet ist, um ein Ungleichgewicht zwischen den Halbperioden der Wellenform des Wechselstroms zu erzeugen, der der Leitung zu geführt wird, und der Nachweiseinrichtung mitzuteilen, daß die genannte Leitung mit einem oder mehreren elektrischen Ausgängen verbunden oder getrennt werden sollte.
**dadurch gekennzeichnet,** daß die Betätigungseinrichtung eine oder mehrere Diodengruppen (60) umfaßt, die oder jede Diodengruppe eine erste und zweite Diodenreihe umfaßt, die parallel zueinander und in entgegengesetzter Richtung angeordnet sind, jede Diodenreihe (61, 62, 61', 62') eine oder mehrere Dioden umfaßt, und der Spannungsabfall über die erste Diodenreihe (61, 61') von dem Spannungsabfall über die zweiten Diodenreihe (62, 62') verschieden ist, worin der Betrieb des Schalters (50, 50') selektiv die genannte Diodengruppe oder Gruppen (60) mit der Leitung verbindet, um das genannte Ungleichgewicht zu erzeugen.

9. Die Betätigungseinrichtung des Anspruchs 8, die selektiv zwei unterschiedliche Abänderungen der Wechselstromwellenform erzeugen kann, um dadurch unterschiedliche Schaltanforderungen an die Nachweiseinrichtung zu übermitteln.

10. Die Betätigungseinrichtung des Anspruchs 9, worin die unterschiedlichen Abänderungen der Wechselstromwellenform unterschiedliche Polaritäten sind.

11. Die Betätigungseinrichtung nach irgeneinem der Ansprüche 8 bis 10, die als ein Lichtschalter ausgestaltet ist.

12. Nachweiseinrichtung für ein System zum Zuführen von geschaltetem und im wesentlichen kontinuierlichen Strom, wobei das System die Nachweiseinrichtung und eine Betätigungseinrichtung umfaßt, die in Reaktion auf die Betätigung eines Schalters (50, 50') ein Ungleichgewicht zwischen den Halbperioden der Wellenform des Wechselstroms erzeugen kann, der zu der Nachweiseinrichtung geht, die Nachweiseinrichtung auf das Gleichgewicht zwischen den Wellenformhalbperioden reagiert, um selektiv die genannte Leitung mit einem oder mehreren elektrischen Ausgängen zu verbinden oder zu trennen,
**dadurch gekennzeichnet**, daß sie ferner eine Ausgleichsschaltung (93) umfaßt,um den Ausgleich zwischen den positiven und den negativen Halbzyklen der Wechselstromwellenform wiederherzustellen.

## Revendications

1. Système pour fournir une alimentation commutée et sensiblement continue, comprenant un actionneur et un moyen de détection, l'actionneur comportant une première borne pour une connexion sur une alimentation alternative et une seconde borne (14) pour une connexion au moyen d'une ligne sur le moyen de détection, l'actionneur étant agencé en utilisation pour répondre à l'activation d'un commutateur (50, 50') de manière à produire un déséquilibre entre les demi-cycles de la forme d'onde de l'alimentation alternative arrivant sur le moyen de détection et le moyen de détection étant sensible à l'équilibre entre les demi-cycles de forme d'onde pour connecter ou déconnecter sélectivement ladite ligne par rapport à une ou plusieurs sorties électriques,
caractérisé en ce que l'actionneur comprend un ou plusieurs modules de diodes (60), le ou chaque module de diodes comprenant des première et seconde chaînes de diodes connectées en parallèle l'une à l'autre et en sens opposés, chaque chaîne de diodes (61, 62, 61', 62') comprenant une ou plusieurs diodes et la chute de tension aux bornes de la première chaîne de diodes (61, 61') étant différente de la chute de tension aux bornes de la seconde chaîne de diodes (62, 62'), dans lequel l'activation du commutateur (50, 50') connecte sélectivement ledit module ou lesdits modules de diodes (60) à la ligne pour produire ledit déséquilibre.

2. Système selon la revendication 1, dans lequel l'actionneur est adapté sélectivement pour produire deux modifications différentes de la forme d'onde alternative pour ainsi signaler différentes exigences de commutation au moyen de détection.

3. Système selon la revendication 2, dans lequel les différentes modifications de la forme d'onde alternative sont de polarités différentes.

4. Système selon la revendication 2 ou 3, comprenant en outre un circuit d'équilibrage (93) au niveau du moyen de détection ou en aval de celui-ci pour restaurer l'équilibre entre les demi-cycles positifs et négatifs de la forme d'onde alternative.

5. Système selon la revendication 4, dans lequel l'actionneur est adapté pour remplacer un commutateur de lumière et le moyen de détection est adapté pour connecter ou déconnecter sélectivement ladite ligne par rapport à une lumière.

6. Système selon la revendication 5, dans lequel la sortie électrique ou les plusieurs sorties électriques supplémentaires incluent une sortie pour alimenter un dispositif d'alarme.

7. Système selon la revendication 6, dans lequel le dispositif d'alarme est prévu en étant combiné selon une unité avec un éclairage de plafond.

8. Actionneur pour une utilisation dans un système permettant de produire une alimentation commutée et sensiblement continue, le système comprenant l'actionneur et un moyen de détection, l'actionneur comportant une première borne pour une connexion sur une alimentation alternative et une seconde borne (14) pour une connexion au moyen d'une ligne sur le moyen de détection, l'actionneur étant agencé pour répondre à l'activation d'un commutateur (50, 50') de manière à produire un déséquilibre entre les demi-cycles de la forme d'onde de l'alimentation alternative appliquée à ladite ligne de façon à signaler au moyen de détection que ladite ligne doit être sélectivement connectée ou déconnectée par rapport à une ou plusieurs sorties électriques,
caractérisé en ce que l'actionneur comprend un ou plusieurs modules de diodes (60), le ou chaque module de diodes comprenant des première et seconde chaînes de diodes connectées en parallèle l'une à l'autre et en sens opposés, chaque chaîne de diodes (61, 62, 61', 62') comprenant une ou plusieurs diodes et la chute de tension aux bornes de la première chaîne de diodes (61, 61') étant différente de la chute de tension aux bornes de la seconde chaîne de diodes (62, 62'), dans lequel l'activation du commutateur (50, 50') connecte sélectivement ledit module ou lesdits modules de diodes (60) à la ligne pour produire ledit déséquilibre.

9. Actionneur selon la revendication 8, adapté sélectivement pour produire deux modifications différentes de la forme d'onde alternative pour ainsi signaler différentes exigences de commutation au moyen de détection.

10. Actionneur selon la revendication 9, dans lequel les différentes modifications de la forme d'onde alternative sont de polarités différentes.

11. Actionneur selon l'une quelconque des revendications 8 à 10, configuré en tant que commutateur de lumière.

12. Moyen de détection pour un système permettant d'appliquer une alimentation commutée et sensiblement continue, le système comprenant le moyen de détection et un actionneur adapté pour, en réponse à l'activation d'un commutateur (50, 50'), produire un déséquilibre entre les demi-cycles de la forme d'onde d'alimentation alternative arrivant sur le moyen de détection, le moyen de détection étant sensible à l'équilibre entre des demi-cycles de ladite forme d'onde pour sélectivement connecter ou déconnecter ladite ligne par rapport à une ou plusieurs sorties électriques,
caractérisé en ce qu'il comprend en outre un circuit d'équilibrage (93) pour restaurer l'équilibre entre les demi-cycles positifs et négatifs de la forme d'onde alternative.
